# EUROPÄISCHE PATENTSCHRIFT

(11) **EP 1 393 118 B1**
(45) Veröffentlichungstag und Bekanntmachung des Hinweises auf die Patenterteilung: **10.08.2005**
(21) Anmeldenummer: 02750777.1
(22) Anmeldetag: 06.06.2002
(51) Int. Cl.: G02B 27/01

(54) **VORRICHTUNG UND VERFAHREN ZUR LASERPROJEKTION HOCHAUFLÖSENDER BILDER AUF DIE NETZHAUT DES AUGES, ÜBERLAGERT MIT DEM BILDINHALT DES GESICHTSFELDES**
DEVICE AND METHOD FOR THE LASER PROJECTION OF HIGH-RESOLUTION IMAGES ONTO THE RETINA OF THE EYE, SUPERIMPOSED WITH THE IMAGE CONTENT OF THE FIELD OF VISION
DISPOSITIF ET PROCEDE DE PROJECTION LASER D'IMAGES A RESOLUTION ELEVEE SUR LA RETINE DE L'OEIL, SUPERPOSEES AVEC LE CONTENU D'IMAGE DU CHAMP VISUEL

(30) Priorität: 06.06.2001 DE 10127367
(43) Veröffentlichungstag der Anmeldung: 03.03.2004
(73) Patentinhaber: Dietrich, Klaus, 97469 Gochsheim (DE)
(72) Erfinder: Dietrich, Klaus, 97469 Gochsheim (DE)
(74) Vertreter: Wahl, Hendrik, Dr.-Ing.
(86) Internationale Anmeldenummer: PCT/DE2002/002068
(87) Internationale Veröffentlichungsnummer: WO 2002/099506

(56) Entgegenhaltungen:
- EP-A- 0 660 155
- US-A- 5 151 722
- US-A- 5 467 104
- MANHART P K ET AL: "A COMPACT, SOLID SCHMIDT OPTICAL RELAY FOR HELMET MOUNTED DISPLAYS" PROCEEDINGS OF THE VIRTUAL REALITY ANNUAL INTERNATIONAL SYMPOSIUM. SEATTLE, SEPT. 18 - 22, 1993, NEW YORK, IEEE, US, Bd. SYMP. 1, 18. September 1993 (1993-09-18), Seiten 234-245, XP000457693
- DROESSLER J G ET AL: "TILTED CAT HELMET-MOUNTED DISPLAY" OPTICAL ENGINEERING, SOC. OF PHOTO-OPTICAL INSTRUMENTATION ENGINEERS. BELLINGHAM, US, Bd. 29, Nr. 8, 1. August 1990 (1990-08-01), Seiten 849-854, XP000141198 ISSN: 0091-3286
- IWAMOTO K ET AL: "A HEAD-MOUNTED EYE MOVEMENT TRACKING DISPLAY AND ITS IMAGE DISPLAY METHOD" SYSTEMS & COMPUTERS IN JAPAN, SCRIPTA TECHNICA JOURNALS. NEW YORK, US, Bd. 28, Nr. 7, 30. Juni 1997 (1997-06-30), Seiten 89-99, XP000723799 ISSN: 0882-1666

## Beschreibung

Die Erfindung betrifft eine optische Anordnung und ein Verfahren zur Projektion von ein- oder mehrfarbigen Videobildern auf die Netzhaut des Auges mit Hilfe eines in der Helligkeit seiner Farbkomponenten modulierten Lichtstrahles (z.B. Laserstrahlgemisch) der über ein oder mehrere elektrisch in ihrem Ablenkwinkel gesteuerte Ablenkspiegel (Spiegelscanner) zweidimensional über die Netzhaut geführt wird, zur sequentiellen scharfen Abbildung der Bildpunkte. Je nach Anwendung wird dabei entweder nur das Videobild (Anwendungsfall: Videobrille) auf die Netzhaut projiziert, oder das Videobild zusätzlich mit dem Bild des Blickfeldes des Beobachterauges überlagert (Anwendungsfall: Pilotenbrille).

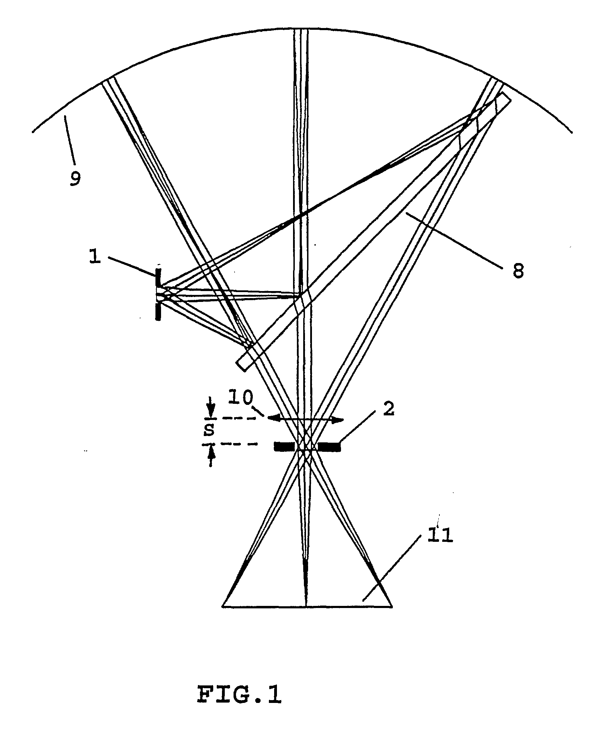

Nach dem Stand der Technik sind verschiedene optische Anordnungen zur Lösung dieses Problems bekannt, z.B.:
1. "Helmet-Mounted-Displays and Sights", Mordekhai Velger, Artech House, Boston/London, 1998
2. "Der Fernseher in der Brille", Elektronik S.18,20,1999
3. US-Pat.Nr. 6 140 979, Microvision Inc. 31.10.2000 Bei allen bisherigen Projektionssystemen werden aufgrund der optischen Abbildungsfehler und der Anordnungen dieser Systeme häufig nur geringe maximale Videobildwinkel zwischen 20°-40° in der Bilddiagonale erreicht, bei nicht zufriedenstellender Bildschärfe. Unter 2. wird z.B. die klassische Anordnung der Abbildung einer Bildfläche mit einem Konkavspiegel auf die Netzhaut des Auges gezeigt. Dabei kommt der Öffnungsfehler des Konkavspiegels voll zur Geltung und beeinträchtigt die Bildschärfe auf der Netzhaut stark. Der Strahlengang unterscheidet sich wesentlich von der Grundanordnung dieser Erfindung (vgl. Anordnung in Fig.1).

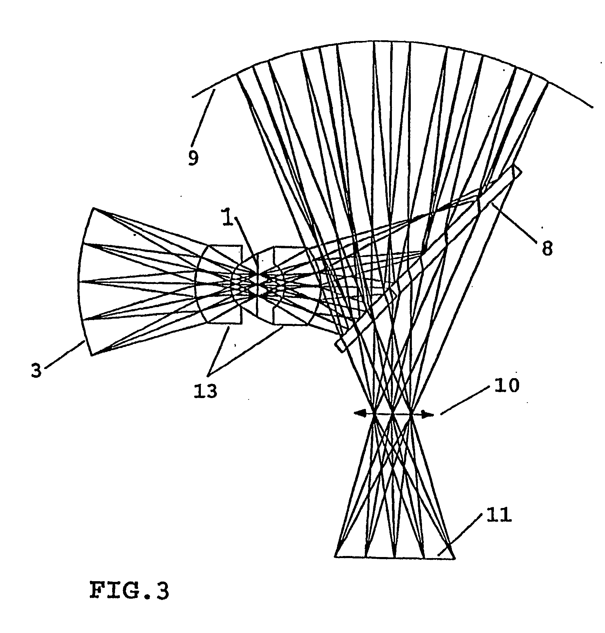

P. K. MANHART ET AL., "A COMPACT, SOLID SCHMIDT OPTICAL RELAY FOR HELMET MOUNTED DISPLAYS", PROCEEDINGS OF THE VIRTUAL REALITY ANNUAL INTERNATIONAL SYMPOSIUM, SEATTLE, SEPT. 18 - 22, 1993; NEW YORK, IEEE, US, BD. SYMP. 1, 18. SEPTEMBER 1993, SEITEN 234 ff., dort insbesondere die Figur 3 zeigen eine Schmidt-Anordnung, bei welcher zum Beispiel über eine Kathodenstrahlröhre ein Primärbild erzeugt wird, welches über einen Strahlteiler gegen einen reflektierenden Konkavspiegel reflektiert wird, den Strahlteiler wiederum durchläuft und auf die Pupille des Beobachterauges fällt. Dieses herkömmliche Schmidt-Teleskop besitzt eine optische Achse, welche senkrecht durch die Mitte der Schmidt-Platte in der Eintrittsöffnung des Teleskops geht. Die Schmidt-Platte ist so berechnet, dass sie für die paraxialen Strahlen den Öffnungsfehler des sphärischen Spiegels korrigiert, und ein scharfer Bildpunkt auf der optischen Achse entsteht. Die parallelen Eingangsstrahlen, die schief zur optischen Achse einfallen, durchlaufen allerdings die Schmidt-Platte ebenfalls schief, so dass für diese schiefen Strahlen die Schmidt-Platte den Öffnungsfehler des sphärischen Spiegels nicht korrekt korrigieren kann. Somit hat eine Schmidt-Kamera zwar eine gute Bildschärfe, aber trotzdem noch Schärfe-Unterschiede zwischen Bildmitte und Bildrand.

Die US 5,467,104, insbesondere Abbildung 3, zeigt eine Zweiachsenablenkeinheit mit zwei hintereinander angeordneten einachsigen Spiegeln, bei der eine Optik zwischen dem Horizontal- und dem Vertikalscanner vorgesehen ist , um eine zufriedenstellende Strahlführung zu erzielen und die optischen Farbabweichungen und Schärfeverluste in Grenzen zu halten.

Es war daher das Ziel dieser Erfindung ein optisches System zu schaffen, das bei einem Videobildfeld und einem überlagerten Blickfeld in der Bilddiagonale jeweils bis zu 60° Bildwinkel erreicht und trotzdem eine extrem hohe Bildschärfe an der physikalischen Grenze der Optik hat, d.h. nur noch durch die Sehschärfe des Beobachterauges und durch die Beugungsbegrenzung des Lichtstrahls (Laserstrahl) limitiert wird. Diese Aufgabe wird durch ein Verfahren gemäß Anspruch 1 und eine Optische Anordnung gemäß Anspruch 11 gelöst. In den Unteransprüchen sind vorteilhafte Ausgestaltungen angegeben und in den nachfolgenden Beschreibung wird die Erfindung an einigen Beispielen erläutert und der zugehörige optische Grundaufbau Aufbau sein Strahlengang und seine verschiedenen Varianten in den Zeichnungen Fig.1 bis Fig.3 schematisch dargestellt.

In Fig.1 ist die grundsätzliche Anordnung des Systems zur hochauflösenden Projektion von Bildpunkten auf die Netzhaut (11) des Beobachterauges angegeben. Das Beobachterauge wird in Fig.1 bis 3 durch eine ideale dünne Linse (10) und eine ebene Netzhaut (11) dargestellt. Die zu einem Bildpunkt auf der Netzhaut (11) gehörenden Lichtstrahlen (gezeichnet sind jeweils drei Strahlen, der Zentral- und die beiden Randstrahlen) durchlaufen konvergent die Eintrittsöffnung (1) des Systems.

Bei einem normalsichtigen Beobachterauge und einem virtuellen Objektabstand bei der Bildprojektion von unendlich liegt die Eintrittsöffnung (1) um die optische Weglänge R=2f entfernt vor dem sphärischen Konkavspiegel (9) (f=Brennweite, R=Radius des Konkavspiegels (9)), d.h. in einem vom ebenen Strahlteiler (8) erzeugten virtuellen Kugelmittelpunkt des Konkavspiegels (9).

Die zu einem Netzhautbildpunkt gehörenden konvergenten Strahlenbündel aus der Eintrittsöffnung (1) werden über den Strahlteiler (8) zum Konkavspiegel (9) reflektiert, schneiden sich jeweils in einem Punkt, der um die optische Weglänge f=R/2 von der Oberfläche des Konkavspiegels (9) entfernt ist, und treffen dann divergent auf den Konkavspiegel (9). Der zu einem Netzhaut Bildpunkt gehörende Zentralstrahl trifft jeweils senkrecht auf die Oberfläche des sphärischen Konkavspiegels (9). Dort werden die Strahlenbündel als parallele Strahlen reflektiert, passieren den Strahlteiler (8) und durchlaufen die Austrittsöffnung (2), die im Kugelmittelpunkt des Konkavspiegels (9) liegt und die das vom Konkavspiegel (9) und Strahlteiler (8) erzeugte Bild der Eintrittsöffnung (1) ist. Nachdem alle zu einem Netzhautbildpunkt gehörenden Lichtstrahlen zwischen Konkavspiegel (9) und der Austrittsöffnung (2) zueinander parallel verlaufen und deren Zentralstrahl durch den Kugelmittelpunkt des Konkavspiegels (9) läuft, handelt es sich bei den jeweiligen Strahlenbündeln aller Netzhautbildpunkte bezüglich des Konkavspiegels (9) um paraxiale Strahlenbündel, unabhängig von deren Einfallswinkel in das Beobachterauge. Somit hat der Konkavspiegel (9) für die Strahlenbündel aller Netzhautbildpunkte den gleichen Öffnungsfehler, und dieser ist wegen des geringen Öffnungsverhältnisses (=Strahldurchmesser/f) sehr klein.

Der Strahlteiler (8) steht im parallelen Strahlengang und verursacht nur Strahlversatz, aber keinen Bildfeldkrümmungsfehler oder chromatischen Fehler im Bild auf der Netzhaut (11). Die Augenlinse (10) ist typisch in der Austrittsöffnung (2) oder geringfügig davor im Abstand S (S größer oder gleich null) angeordnet. Bei großem Strahlquerschnitt in der Austrittspupille (2) und bei S>0 ist Bildprojektion auf die Netzhaut (11) auch bei Bewegung des Auges möglich, ohne daß eine Kompensation der Augenbewegung durch das Projektionssystem notwendig wird.

Soll dem auf der Netzhaut projizierten Bild noch das Bild des Gesichtsfeldes überlagert werden (Anwendungsfall: Pilotenbrille), dann wird der Konkavspiegel (9) als teildurchlässiger Spiegel ausgebildet.

Zur Erzeugung eines endlichen virtuellen Objektabstandes für das projizierte Netzhautbild oder zur Korrektur von Fehlsichtigkeit des Betrachterauges wird die Eintrittsöffnung (1) längs ihrer optischen Achse geringfügig aus dem virtuellen Kugelmittelpunkt des Konkavspiegels (9) verschoben, dies erzeugt für die vom Spiegel (9) reflektierten Lichtbündel die erforderliche geringe Strahldivergenz oder Strahlkonvergenz der Lichtbündel vor Eintritt in die Augenlinse (10).

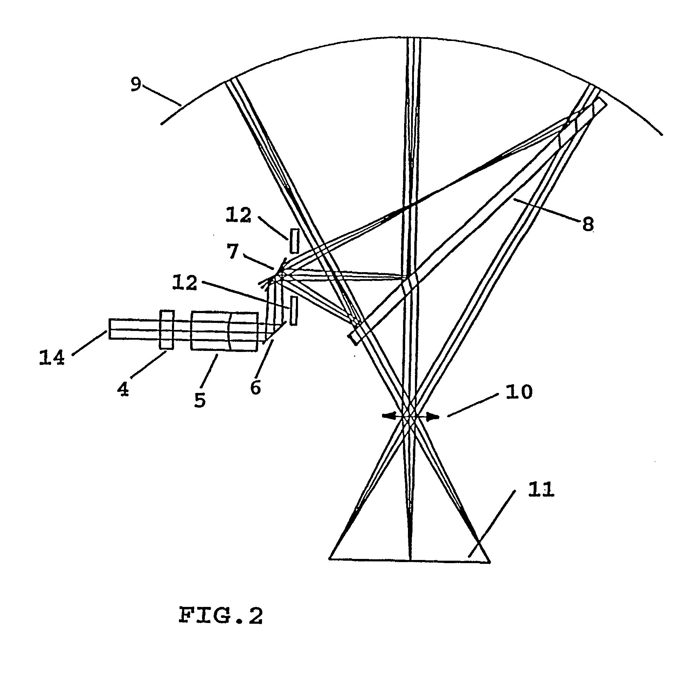

Fig. 2 zeigt eine typische Anordnung zur Projektion von Videobildern auf die Netzhaut (11) des Beobachterauges. Vorausgesetzt wird ein ein- oder mehrfarbiger paralleler Lichtstrahl (z.B. ein Laserstrahlgemisch) dessen Farbkomponenten in ihrer Helligkeit von den seriellen Bildpunktdaten eines Videosignals moduliert werden. Ferner wird ein elektronisches Ansteuergerät vorausgesetzt, das aus den Zeilen- und Bildsysnchronisationssignalen des Videosignals oder anderen Bildpunktkoordinatendaten die erforderlichen Steuersignale erzeugt, um z.B. einen kardanisch aufgehängten Zwei-achsen-Ablenkspiegel (Spiegelscanner) (7) so anzusteuern, daß der Lichtstrahl für jeden Bildpunkt des Videosignals um den erforderlichen Azimut- und Elevationswinkel abgelenkt wird, sodaß der Bildpunkt auf der Netzhaut (11) des Beobachterauges an der gewünschten Stelle im projizierten Bild abgebildet wird.

Der modulierte parallele Lichtstrahl läuft von der Einkoppelstelle (14) ggf. über einen Dämpfungsfilter (4) durch ein ein- oder mehrlinsiges Konvergenzsystem (5) zur Erzeugung des erforderlichen konvergenten Strahlenbündels, das ggf. über den Umlenkspiegel (6) dem zweiachsigen elektrisch gesteuerten Ablenkspiegel (7) zugeführt wird, dieser ist in der Eintrittsöffnung (1) des Projektionssystems angeordnet. Der Ablenkspiegel (7) ist in Fig.2 gleichzeitig für drei verschiedene Winkelpositionen mit den zugehörigen reflektierten Strahlbündeln eingezeichnet.

Das Linsensystem (5) erzeugt die gewünschte Konvergenz des Strahlenbündels, aber es kann auch noch die Beseitigung der geringen Abbildungsfehler des sphärischen Konkavspiegels (9) übernehmen, da diese Fehler bei der Anordnung des Projektionssystems unabhängig von der Winkelstellung des Ablenkspiegels (7) für alle Netzhautbildpunkte gleich sind.

Um bei kleinen Strahlbündelquerschnitten durch die Augenlinse (10) trotzdem bei der Videobildprojektion auf die Netzhaut (11) eine Augenbewegung zuzulassen, wird um den Ablenkspiegel (7) in der Ebene der Öffnung (1) ein ortsauflösender Lichtdetektor (12) (Bildsensor oder Mehrfachsegment-Detektor) angeordnet. Der Konkavspiegel (9) bildet auf ihn die Oberfläche des Beobachterauges ab. Aus den Signalen des Detektors (12) kann die Lage der Pupille des Beobachterauges bestimmt werden und daraus lassen sich elektrische Ansteuersignale für Antriebsmotoren für zweidimensionale Stellelemente erzeugen, mit denen die ganze optische Anordnung, bestehend aus den Elementen (14),(4),(5),(6), (7),(12),(8),(9) horizontal und vertikal so verschoben wird, daß die Austrittsöffnung (2) (vgl. Fig.1) der bewegten Pupille des Beobachterauges nachgeführt wird. Zusätzlich läßt sich aus den Signalen des Detektors (12) auch die Beleuchtungsstärke auf der Augenoberfläche, erzeugt vom beobachtete Gesichtsfeld durch den teildurchlässigen Konkavspiegel (9) messen, und die erforderliche Projektionshelligkeit des Videobildes auf der Netzhaut einstellen.

Außerdem läßt sich aus den Signalen des Detektors (12) die jeweilige Blickrichtung des Beobachterauges ermitteln, was zur augengesteuerten Menübedienung bei der Auswahl des gewünschten Inhaltes der Videobildprojektion benutzt werden kann.

Um die Nachführung des ganzen Projektionssystems bei Augenbewegung zu vermeiden sind große Strahlquerschnitte in der Ebene der Augenlinse (10) notwendig. Dies läßt sich entweder mit einem großflächigen Ablenkspiegel (7) in Fig.2 erreichen, oder nach Fig.3 durch Erzeugung eines Primärbildes auf einer streuenden Bildschirmfläche (3), dessen von jedem Bildpunkt ausgehenden breiten Streulichtkegels von einem Linsensystem (13) (z.B. achromatische Kugellinse) zu konvergenten Strahlenbündeln fokussiert werden, deren Schnittpunkte auf einer Kugelfläche mit dem Radius R/2 liegen, und die in Fig.3 aus einer virtuellen Öffnung mit großem Querschnitt zu kommen scheint, die mit der Eintrittsöffnung (1) des Projektionssystems nach Fig.1 zusammenfällt. Somit läßt sich das Primärbild auf die Netzhaut (11) abbilden. In Fig.3 verläuft zufällig nicht jeder zu den Netzhautbildpunkten gehörender Zentralstrahl exakt senkrecht zur Oberfläche des Konkavspiegels (9). Derart geringe Abweichungen sind tolerabel, ohne großen Schärfeverlust im Bild auf der Netzhaut (11).

Die Erzeugung des Primärbildes auf der Bildschirmfläche (3) kann auf folgende Weise erfolgen:
1. Das Primärbild wird von einem in der Intensität modulierten Lichtstrahl auf der Fläche (3) mit Hilfe eines zweiachsigen Ablenkspiegelsystems (Spiegelscanner) eingeschrieben.
2. Die streuende Bildschirmfläche (3) ist die Ausgangsfläche einer Faseroptikplatte, auf deren Eingangsseite das Primärbild
   a. von einem in seiner Intensität modulierten Lichtstrahl mit Hilfe eines zweiachsigen Ablenkspiegelsystems (Spiegelscanner) eingeschrieben wird,
   b. von einer Kathodenstrahlröhre, einem Flüssigkristall- oder Plasmabildschirm eingekoppelt wird,
und von den Lichtleitfasern auf die Ausgangsseite (3) der Faserplatte durchgeleitet und gestreut abgestrahlt wird.

## Patentansprüche

1. Optisches Verfahren zur Projektion elektronischer Bilddaten, z. B. von Videobildern, mittels einer optischen Anordnung auf die Netzhaut (11) des Beobachterauges mit der Augenlinse (10) wobei alle Lichtstrahlen, die sich auf der Netzhaut des Auges in einem Bildpunkt treffen,
a) eine Korrekturoptik (5), durch welche ein konvergentes Strahlenbündel zum Eintritt in eine Eintrittsöffnung (1) der optischen Anordnung erzeugt wird, und anschliessend einen Zwei-Achsen-Ablenkspiegel durchlaufen, oder
b) von einem Primärbild auf einer gekrümmten und streuenden Bildschirmfläche (3) erzeugt werden, wobei die von jedem Bildpunkt ausgehenden divergierenden Streulichtkegel von einem achromatischen Kugellinsensystem (13) zu konvergenten Strahlenbündeln fokussiert werden, die eine innerhalb des achromatischen Kugellinsensystems (13) liegende Eintrittsöffnung (1) der optischen Anordnung durchlaufen,
über einen Strahlteiler (8) reflektiert werden, sich in einem Brennpunkt schneiden, anschliessend senkrecht auf einen Konkavspiegel (9) auftreffen, von dem sie ganz oder teilweise reflektiert werden, den Strahlteiler (8) passieren und schliesslich eine Austrittsöffnung (2) der optischen Anordnung erreichen, wobei das System bestehend aus dem Strahlteiler (8) und dem Konkavspiegel (9) eine Abbildung der Eintrittsöffnung (1) auf die Austrittsöffnung (2) vornimmt, so dass die Lichtstrahlen aller Bildpunkte auf der Netzhaut (11) des Beobachterauges durch die Eintrittsöffnung (1) und die Austrittsöffnung (2) laufen müssen, wobei die Linse (10) und Pupille des Beobachterauges in einem Abstand S grösser oder gleich null vor der Austrittsöffnung (2) liegen.

2. Verfahren nach Anspruch 1 , **dadurch gekennzeichnet, dass** der zu jedem Bildpunkt auf der Netzhaut (11) des Beobachterauges gehörende Zentralstrahl, d.h. der Strahl der jeweils durch die Mitte der Austrittsöffnung (2) verläuft, aus der Eintrittsöffnung (1) den Konkavspiegel (9) senkrecht oder fast senkrecht trifft.

3. Verfahren nach einem der vorhergehenden Ansprüche, **dadurch gekennzeichnet, dass** ein sphärischer Konkavspiegel (9) verwendet wird, und sich die zu einem Bildpunkt auf der Netzhaut (11) gehörenden konvergenten Lichtstrahlen aus der Eintrittsöffnung (1) sich vor Erreichen des sphärischen Konkavspiegels (9), dessen Kugelradius R beträgt, in einem Punkt schneiden, der
a) bei einem normalsichtigem Beobachterauge die optische Wegstrecke R/2 von der Spiegeloberfläche (9) entfernt ist.
b) eine optische Wegstrecke geringfügig grösser oder kleiner als R/2 von der Spiegeloberfläche (9) entfernt ist, um die nötige Strahldivergenz oder Strahlkonvergenz in der Austrittsöffnung (2) zu erzeugen, die zur Korrektur von Fehlsichtigkeit des Beobachterauges für scharfe Abbildung auf der Netzhaut (11) erforderlich ist.

4. Verfahren nach einem der vorhergehenden Ansprüche, **dadurch gekennzeichnet, dass** im freien Raum um die Eintrittsöffnung (1) ein ortsauflösender Lichtdetektor (12), z.B. ein Bildsensor oder Mehrfachsegmentdetektor, angeordnet ist, auf den über den Strahlteiler (8) und Spiegel (9) die Augenoberfläche ganz oder teilweise abgebildet wird, sodass aus den Signalen des Detektors (12) bei Bewegung des Beobachterauges Steuersignale für Stellmotoren erzeugt werden, welche die ganze optische Anordnung bestehend aus den Komponenten (14), (4), (5), (6), (7), (12), (8), (9) so verschieben, dass die Austrittsöffnung (2) der Pupillenbewegung des Beobachterauges folgt.

5. Verfahren nach einem der vorhergehenden Ansprüche, **dadurch gekennzeichnet, dass** ein ein- oder mehrfarbiger Lichtstrahl, z. B. ein Gemisch verschiedenfarbiger Laserstrahlen, der in der Intensität seiner Farbkomponenten vom Inhalt der einzelnen Bildpunkte eines Videosignals sequentiell moduliert ist, ein ein- oder mehrlinsiges optisches System (5) zur Erzeugung der geforderten Strahlkonvergenz in der Eintrittsöffnung (1) durchläuft, und der Lichtstrahl dann von einem Spiegelablenksystem (7), angeordnet in der Eintrittsöffnung (1) um zwei Drehachsen abgelenkt wird, wobei das Spiegelablenksystem (7) durch elektrische Signale so angesteuert wird, dass der Lichtstrahl für jeden Bildpunkt um die erforderlichen Winkel abgelenkt wird, sodass beim Bildaufbau auf der Netzhaut (11) jeder Bildpunkt an dem gewünschten Ort innerhalb des Bildes auf der Netzhaut (11) fokussiert wird.

6. Verfahren nach einem der Ansprüche 1 bis 4, **dadurch gekennzeichnet, dass** das auf die Netzhaut (11) des Beobachterauges zu projizierende Bild zunächst auf einer streuenden Schirmfläche (3) erzeugt wird, die als Mattscheibe oder Ausgangsseite einer Faserplatte ausgebildet ist.

7. Verfahren nach einem der Ansprüche 1 bis 4 und 6, **dadurch gekennzeichnet, dass** die ausgangsseitige Hauptebene des achromatischen Kugellinsensystems (13) in der Eintrittsöffnung (1) der optischen Anordnung liegt.

8. Verfahren nach Anspruch 6, **dadurch gekennzeichnet, dass** das Primärbild auf die Vorder- oder Rückseite der streuenden, ggf. transparenten Bildschirmfläche (3) von einem zweiachsigen Ablenkspiegel mit einem ein- oder mehrfarbigen Lichtstrahl, z.B. einem Spiegelscanner, geschrieben wird.

9. Verfahren nach einem der vorhergehenden Ansprüche, **dadurch gekennzeichnet, dass** aus den Signalen des ortsauflösenden Lichtdetektors (12) die Beleuchtungsstärke der Augenoberfläche ermittelt wird und nach diesem Messwert die gewünschte Helligkeit der Videobildprojektion eingestellt wird.

10. Verfahren nach einem der vorhergehenden Ansprüche, **dadurch gekennzeichnet, dass** aus den Signalen des Lichtdetektors (12) die Blickrichtung des Beobachterauges bestimmt wird und beim Betrachten verschiedener bestimmter Winkelfelder, die im projizierten Videobild bei Betrachtung als "optische Menütasten" definiert sind, der Beobachter durch Augensteuerung den projizierten Videobildinhalt beeinflussen kann.

11. Optische Anordnung zur Projektion elektronischer Bilddaten auf die Netzhaut (11) des Beobachterauges mit der Augenlinse (10), welche Anordnung folgende Komponenten aufweist,
a) eine Korrekturoptik (5), durch welche ein konvergentes Strahlenbündel zum Eintritt in die Eintrittsöffnung (1) der Anordnung erzeugt wird, und einen im Strahlengang nachfolgenden Zwei-Achsen-Ablenkspiegel, oder
b) eine gekrümmte und streuende Bildschirmfläche (3) zur Erzeugung eines Primärbildes, und ein nachfolgendes achromatisches Kugellinsensystem (13) zum Fokussieren der von jedem Bildpunkt der Bildschirmfläche ausgehenden divergenten Streulichtkegel durch die Eintrittsöffnung (1) der Anordnung zu konvergenten Strahlenbündeln,
einen im Strahlengang nachgeordneten Strahlteiler (8) zur Reflexion der Strahlen derart, dass sie sich in einem Brennpunkt schneiden, einen nachfolgenden Konkavspiegel (9), der derart ausgebildet/angeordnet ist, dass die Strahlen senkrecht oder fast senkrecht auf ihn auftreffen und danach ganz oder teilweise auf den Strahlteiler (8) reflektiert werden, und eine Austrittsöffnung (2) der Anordnung, wobei das System bestehend aus dem Strahlteiler (8) und dem Konkavspiegel (9) derart ausgebildet/angeordnet ist, dass es eine Abbildung der Eintrittsöffnung (1) auf die Austrittsöffnung (2) der Anordnung vornimmt, sodass die Lichtstrahlen aller Bildpunkte auf der Netzhaut (11) des Beobachterauges durch die Eintrittsöffnung (1) und die Austrittsöffnung (2) laufen müssen.

12. Anordnung nach Anspruch 11, **dadurch gekennzeichnet, dass** es sich bei dem Konkavspiegel (9) um einen sphärischen Spiegel handelt und sich die Austrittsöffnung (2) im Kugelmittelpunkt des Konkavspiegels (9) befindet.

13. Anordnung nach Anspruch 11 oder 12, **dadurch gekennzeichnet, dass** im freien Raum um die Eintrittsöffnung (1) ein ortsauflösender Lichtdetektor (12) angeordnet ist, auf den die Augenoberfläche über den Strahlteiler (8) und Spiegel (9) ganz oder teilweise abgebildet wird, welcher Lichtdetektor zur Erzeugung von Steuersignalen für Stellmotoren vorgesehen ist, welche die komplette optische Anordnung bestehend aus den Komponenten (14), (4), (5), (6), (7), (12), (8), (9) so verschieben, dass die Austrittsöffnung (2) der Pupillenbewegung des Beobachterauges folgt.

14. Anordnung nach einem der Ansprüche 11 bis 13 zur Verarbeitung eines ein- oder mehrfarbiger Lichtstrahls oder Lichtstrahlbündels, der/das in der Intensität seiner Farbkomponenten vom Inhalt der einzelnen Bildpunkte eines Videosignals sequentiell moduliert ist, **gekennzeichnet durch** ein ein- oder mehrlinsiges optisches System (5) zur Erzeugung der geforderten Strahlkonvergenz in der Eintrittsöffnung (1), und ein Spiegelablenksystem, z.B. Spiegelscanner) (7), das in der Eintrittsöffnung (1) angeordnet und um zwei Drehachsen ablenkbar ist.

15. Anordnung nach einem der Ansprüche 11 bis 13, **durch gekennzeichnet, dass** die streuende Schirmfläche (3) die Ausgangsseite einer Faserplatte ist, auf deren Eingangsseite das Primärbild mit einem der folgenden Bilderzeugungssystemen schreibbar ist:
a.) Kathodenstrahlröhre mit integrierter Faserplatte.
b.) Beleuchteter Flüssigkristallbildschirm
c.) Plasmabildschirm
d.) Lichtstrahl abgelenkt von einem zweiachsigen Ablenkspiegel (Spiegelscanner).

16. Anordnung nach Anspruch 15, **dadurch gekennzeichnet, dass** die Faserplatte am Eingang und am Ausgang gekrümmte Flächen besitzt.

17. Anordnung nach einem der Ansprüche 11 bis 16, **dadurch gekennzeichnet, dass** es sich bei dem Konkavspiegel (9) um einen sphärischen teildurchlässigen Spiegel handelt, zur Überlagerung des auf die Netzhaut (11) projizierten Videobilds mit dem Blickfeld, das das Beobachterauge durch den teildurchlässigen Spiegel (9) betrachtet.

## Claims

1. Optical method for retinal projection of electronic image data, e.g. video images by means of an optical assembly, on the retina (11) of a viewing eye with eye lens (10), wherein all light beams incident on the retina (11) in a pixel
a) pass correction optics (5) generating a convergent beam for entering the entrance aperture (1) of the optical assembly and subsequently pass a two-axes deflection mirror, or
b) are generated from a primary image on a curved and scattering screen (3), whereby the wide scattered light cones emerging from each pixel are focussed by an achromatic ball lens system (13) into convergent light beams, passing an entrance opening (1) of the optical assembly arranged within the achromatic ball lens system,
are reflected by a beam splitter (8), intersect at a focal point and subsequently pass normal on a concave mirror (9) from which they are fully or partly reflected, pass through the beam splitter (8) and ultimately reach an exit aperture (2) of the optical assembly, the system comprising the beam splitter (8) and the concave mirror (9) imaging the entrance aperture (1) on the exit aperture (2), whereby the system consisting of beam splitter (8) and concave mirror (9) generates an image of the entrance aperture (1) to the exit aperture (2), so that the light beams of all pixels on the retina (11) of the viewing eye need to pass through the entrance aperture (1) and the exit aperture (2), the lens (10) and aperture of the viewing eye being located at a spacing S larger than or equal to zero in front of the exit aperture (2).

2. The method as set forth in claim 1 , **characterized in that** the central beam belonging to each pixel on the retina (11) of the viewing eye, i.e. the beam running through the middle of the exit aperture (2) from the entrance aperture (1) is incident at the concave mirror (9) perpendicular or near perpendicular, respectively.

3. The method as set forth in any of the preceding claims, **characterized in** a spherical concave mirror (9) is used, and that the convergent light beams associated with a pixel on the retina (11) from the entrance aperture (1) intersect before reaching the spherical concave mirror (9) whose spherical radius is R in a point which
a) for a viewing eye with normal eyesight is remote from the surface of the mirror (9) by the optical distance R/2,
b) is remote from the surface of the mirror (9) by the optical distance slightly more or less than R/2 to diverge or converge the beam as needed in the exit aperture (2) for correcting deficient eyesight of the viewing eye to achieve a crisp image on the retina (11).

4. The method as set forth in any of the preceding claims, **characterized in that** in the free space surrounding the entrance aperture (1) an imaging sensor (12) (i.e. image or multi-segment sensor) is arranged on which the surface of the eye is imaged fully or in part via the beam splitter (8) and mirror (9) so that from the signals of the sensor (12) with movement of the viewing eye signals are generated for steering servo-motors which shift the complete optical assembly comprising the components (14), (4), (5), (6), (7), (12), (8), (9) so that the exit aperture (2) follows the pupil movement of the viewing eye.

5. The method as set forth in any of the preceding claims, **characterized in that** a monochromatic or color light beam, e.g. a mixture of various color laser beams, which is sequentially modulated by the content of the individual pixels in the intensity of its color components, passes through a single or multiple lens optical system (5) for generating the required beam-convergence in the entrance aperture (1), the light beam then being deflected by a system of a deflecting mirror (7) arranged in the entrance aperture (1) about two axes of rotation, the scanning mirror system (7) being steered by electrical signals so that the light beam is deflected for each pixel by the required angles, so that in configuring the retinal projection each pixel is focussed at the desired location within the image on the retina (11).

6. The method as set forth in any of the claims 1 to 4, **characterized in that** the image to be projected on the retina (11) of the viewing eye is first generated on a scattering screen (3), which is a groundglass or the output side of a fiber plate.

7. Method according to one of the claims 1 to 4 and 6, **characterized in that** the main plane at the exit side of the achromatic ball lens system (13) is in the entrance opening (1) of the optical assembly.

8. The method as set forth in claim 6, **characterized in that** the primary image is written on the front or rear side of the scattering and/or transparent screen (3) by a dual axis scanning mirror with a monochromatic or multicolour light beam, e.g. a mirror scanner.

9. The method as set forth in any of the preceding claims, **characterized in that** from the signals of the imaging sensor (12) the illumination at eye surface is sensed from which the desired brightness of the video display is set.

10. The method as set forth in any of the preceding claims, **characterized in that** from the signals of the imaging sensor (12) the viewing direction of the viewing eye is determined and that by viewing various defined angle fields defined in the video projection as an "optical menu toolbar" the viewer can influence the video display content via eye steering.

11. Optical assembly for the projection of electronic image data on the retina (11) of a viewing eye with eye lens (10), which assembly comprises following components,
a) correction optics (5) for generating a convergent beam for entering the entrance aperture (1) of the assembly and a subsequently arranged two-axes deflection mirror, or
b) a curved and scattering screen (3) for generating a primary image, and a subsequently following achromatic ball lens system (13) for focussing the wide scattered light cones emerging from each pixel of the scattering screen through the entrance opening (1) of the assembly into convergent light beams,
a beam splitter (8) following in the beam path for reflecting the beams so that they intersect at a focal point, a subsequently following concave mirror (9) designed to be impinged by the beams in a normal or nearly normal direction and afterwards being fully or partly reflected to the beam splitter (8), and an exit aperture (2) of the optical assembly, the system comprising the beam splitter (8) and the concave mirror (9) being designed to image the entrance aperture (1) to the exit aperture (2), so that the light beams of all pixels on the retina (11) of the viewing eye need to pass through the entrance aperture (1) and the exit aperture (2).

12. Assembly as set forth in claim 11, **characterized in that** the concave mirror (9) is a spherical mirror and the exit aperture (2) is located at the spherical centerpoint of the concave mirror (9).

13. Assembly as set forth in any of claims 11 or 12, **characterized in that** in the free space surrounding the entrance aperture (1) an imaging sensor (12) is arranged on which the surface of the eye is imaged fully or in part via the beam splitter (8) and mirror (9), which imaging sensor is designed for generating steering commands for servo-motors which shift the complete optical assembly comprising the components (14), (4), (5), (6), (7), (12), (8), (9) so that the exit aperture (2) follows the pupil movement of the viewing eye.

14. Assembly as set forth in any of claims 11 to 13 for handling a monochromatic or multicolor light beam or beam bundle, which is sequentially modulated by the content of the individual pixels of a video signal in the intensity of its color components, **characterized by** a single or multiple lens optical system (5) for generating the required beam-convergence in the entrance aperture (1), and a system of a deflecting mirror, e.g. mirror scanner (7) arranged in the entrance aperture (1) and being deflectable around two axes of rotation.

15. Assembly as set forth in any of claims 11 to 13, **characterized in that** the scattering screen (3) is the output side of a fiber plate, on the input side of which the primary image is written by one of the following imaging systems:
a) CRT with integrated fiber plate,
b) illuminated LCD,
c) plasma display screen,
d) beam deflected by a dual-axis light beam scanning mirror (mirror scanner).

16. Assembly as set forth in claim 15, **characterized in that** input and output of the fiber plate are curved surfaces.

17. Assembly as set forth in any of the claims 11 to 16, **characterized in that** the concave mirror (9) is a spherical partly transparent mirror so that the retinal projection is superimposed by the field of view as seen by the viewing eye through the partly transparent mirror (9).

## Revendications

1. Procédé optique pour la projection de données d'images électroniques, par exemple, des images vidéo, au moyen d'un dispositif optique sur la rétine de l'oeil (11) de l'observateur avec une lentille de l'oeil (10) ; tous les faisceaux de lumière se rencontrant dans un point d'image sur la rétine de l'oeil
a) parcourant une optique de correction (5) au moyen de laquelle on génère un faisceau convergent destiné à rentrer dans l'ouverture d'entrée (1) du dispositif optique et parcourant ensuite un miroir de déviation à deux axes, ou
b) étant générés à partir d'une image primaire sur une surface d'écran (3) courbée où les cônes de la lumière dispersée divergents qui partent d'un point d'image, se trouvent focalisés par un système à lentilles sphériques (13) achromatiques vers des faisceaux convergents qui parcourent une ouverture d'entrée (1) du dispositif optique, laquelle ouverture est située à l'intérieur du système à lentilles sphériques achromatiques ; lesquels rayons de lumière sont réfléchis via un séparateur de rayons (8), puis s'intersectent dans un foyer, arrivent ensuite de façon perpendiculaire sur un miroir concave (9) à partir duquel ils sont réfléchis entièrement ou partiellement, traversent le séparateur de rayons (8) et atteignent ensuite une ouverture de sortie (2) du dispositif optique ; le système composé d'un séparateur de rayons (8) et d'un miroir concave (9) générant une image d'ouverture d'entrée (1) sur l'ouverture de sortie (2) de manière à ce que les rayons de lumière de tous les points d'image sur la rétine (11) de l'oeil de l'observateur traversent l'ouverture d'entrée (1) et l'ouverture de sortie (2) où sont situés les lentilles (10) et la pupille de l'oeil de l'observateur, à une distance S supérieure ou égale à zéro de l'ouverture de sortie (2).

2. Procédé selon la revendication 1, **caractérisé en ce que** le rayon central appartenant à chaque point d'image sur la rétine (11) de l'oeil de l'observateur, c'est-à-dire, le rayon qui traverse le milieu d'ouverture d'entrée (2), arrive à partir de l'ouverture d'entrée (1) de façon perpendiculaire ou presque perpendiculaire sur le miroir concave (9).

3. Procédé selon une des revendications précédentes, **caractérisé en ce que** l'on utilise un miroir concave sphérique (9) et **en ce que** les rayons de lumière convergents appartenant à un point d'image sur la rétine (11), s'intersectent dans un point, à partir de l'ouverture d'entrée avant, **en ce qu'**ils atteignent le miroir concave (9) sphérique dont le rayon de sphère est R, lequel point :
a) est éloigné de l'oeil de l'observateur à vue normale à une distance optique R/2 de la surface de miroir (9),
b) la distance optique est un peu plus grande ou plus petite que R/2 par rapport à la surface de miroir (9) afin de produire une divergence de rayon nécessaire ou une convergence de rayon dans l'ouverture de sortie (2), qui est nécessaire pour la correction de la mauvaise vue de l'observateur pour une représentation nette sur la rétine de l'oeil (11).

4. Procédé selon une des revendications précédentes, **caractérisé en ce qu'**un détecteur de lumière (12) à résolution locale , par exemple un capteur d'image ou un détecteur à segments multiples est disposé dans l'espace libre autour de l'ouverture d'entrée (1) sur lequel la surface de l'oeil est représentée en entier ou en partie via le séparateur de rayons (8) et le miroir (9) de manière à ce que des signaux de commande pour les moteurs de réglage soient générés à partir des signaux du détecteur (12) lors d'un mouvement de l'oeil de l'observateur, lesquels moteurs déplacent tout le dispositif optique composé des composants (14), (4), (5), (6), (7), (12), (8), (9) de manière à ce que l'ouverture de sortie (2) suive le mouvement de la pupille de l'oeil de l'observateur.

5. Procédé selon une des revendications précédentes, **caractérisé en ce qu'**un rayon de lumière ou un rayon de lumière multicolore, par exemple, un mélange de rayons laser de différentes couleurs, modulé de façon séquentielle dans l'intensité de ses composants de couleur par le contenu des points d'image individuels d'un signal vidéo, traverse un ou plusieurs système(s) (5) optique (s) comportant plusieurs lentilles afin de générer la convergence de rayon nécessaire dans l'ouverture d'entrée (1), et **en ce que** le rayon de lumière est dévié alors par un système de déviation à miroir (7) disposé dans l'ouverture d'entrée (1) autour de deux axes de rotation ; le système de déviation à miroir (7) étant commandé par des signaux électriques de manière à ce que le rayon de lumière se trouve dévié pour chaque point d'image selon l'angle nécessaire et que chaque point d'image se trouve focalisé à l'endroit souhaité à l'intérieur de l'image sur la rétine de l'oeil (11) lors de la formation de l'image sur la rétine de l'oeil (11).

6. Procédé selon une des revendications 1 à 4, **caractérisé en ce que** l'image à projeter sur la rétine de l'oeil (11) de l'observateur est tout d'abord générée sur une surface frontale (3) qui diffuse réalisée en tant que verre dépoli ou sur le côté de sortie en tant que plaque en fibres.

7. Procédé selon une des revendications 1 à 4, **caractérisé en ce que** le plan principal du côté de la sortie du système à lentilles sphériques (13) achromatiques se trouve dans l'ouverture d'entrée (1) du dispositif optique.

8. Procédé selon la revendication 6, **caractérisé en ce que** l'image primaire est écrite sur le côté frontal ou le côté arrière de la surface d'écran (3) qui diffuse, ou éventuellement transparente par un miroir de déviation à deux axes avec un rayon de lumière monochrome ou multicolore, par exemple, un scanner à miroir.

9. Procédé selon une des revendications précédentes, **caractérisé en ce que** l'intensité d'éclairage de la surface de l'oeil est transmise à partir des signaux du détecteur de lumière (12) à résolution locale et que la clarté souhaitée de la projection de l'image vidéo est réglée selon cette valeur de mesure.

10. Procédé selon une des revendications précédentes, **caractérisé en ce que** la direction du regard de l'observateur est déterminée à partir des signaux du détecteur de lumière (12) et **en ce que** l'observateur puisse influencer au moyen d'une commande oculaire le contenu de l'image vidéo projetée lors de l'observation de différents champs angulaires déterminés définis en tant que « touches de menu optiques » dans l'image vidéo projetée.

11. Dispositif optique pour la projection de données d'images électroniques sur la rétine (11) de l'oeil de l'observateur au moyen de la lentille (10) de l'oeil, lequel dispositif comprend les composants suivants :
a) une optique de correction (5) par laquelle on génère un faisceau de rayons convergents pour l'introduction dans l'ouverture d'entrée (1) du dispositif, et un miroir de déviation à deux axes consécutif dans le trajet des rayons, ou
b) une surface d'écran (3) courbée ou qui diffuse pour générer une image primaire et un système à lentilles sphériques (13) achromatique consécutif pour focaliser le cône de lumière diffusée divergent partant de chaque point d'image de la surface d'écran à travers l'ouverture d'entrée (1) du dispositif vers des faisceaux de rayons convergents,
et un séparateur de rayons (8) disposé en aval dans le trajet des rayons pour la réflexion des rayons de manière à ce qu'ils s'intersectent dans un foyer, un miroir concave (9) en aval qui est réalisé/disposé de manière à ce que les rayons arrivent de façon perpendiculaire ou presque perpendiculaire sur lui, puis se trouvent réfléchis entièrement ou partiellement sur le séparateur de rayons (8), et une ouverture de sortie (2) du dispositif ; le système composé du séparateur de rayons (8) et du miroir concave (9) étant réalisé/disposé de manière à réaliser une image de l'ouverture d'entrée (1) sur l'ouverture de sortie (2) du dispositif, afin que tous les rayons de lumière de tous les points d'image puissent s'étendre sur la rétine de l'oeil (11) de l'observateur à travers l'ouverture d'entrée (1) et l'ouverture de sortie (2).

12. Dispositif selon la revendication 11, **caractérisé en ce qu'**il s'agit d'un miroir sphérique en ce qui concerne le miroir concave et que l'ouverture de sortie (2) se trouve au milieu de la sphère du miroir concave (9).

13. Dispositif selon la revendication 11 ou 12, **caractérisé en ce qu'**un détecteur de lumière (12) à résolution locale est disposé dans l'espace libre autour de l'ouverture d'entrée (1), sur lequel on représente entièrement ou partiellement la surface de l'oeil par un séparateur de rayons (8) et par un miroir (9), lequel détecteur de lumière est prévu pour générer des signaux de commande pour des moteurs de réglage, lesquels déplacent tout le dispositif optique composé des composants (14), (4), (5), (6), (7), (12), (8), (9) de manière à ce que l'ouverture de sortie (2) suive le mouvement de la pupille de l'observateur.

14. Dispositif selon une des revendications 11 à 13 pour le traitement d'un rayon de lumière monochrome ou multicolore ou d'un faisceau de rayons de lumière qui est modulé de façon séquentielle dans l'intensité de ses composants de couleur par le contenu des points d'image individuels d'un signal vidéo, **caractérisé par** un système (5) optique à une ou plusieurs lentilles destiné à générer la convergence de rayon nécessaire dans l'ouverture d'entrée (1) et un système de déviation à miroir, par exemple, un scanner à miroir (7) qui est disposé dans l'ouverture d'entrée (1) et peut être dévié autour de deux axes.

15. Dispositif selon une des revendications 11 à 13, **caractérisé en ce que** la surface frontale (3) qui diffuse est le côté de sortie d'une plaque en fibres sur lequel côté d'entrée on peut écrire l'image primaire avec un des systèmes de production d'images suivant :
a) tube à rayons cathodiques avec une plaque en fibres intégrée.
b) un écran à cristaux liquides éclairé.
c) un écran à plasma
d) un rayon de lumière dévié d'un miroir de déviation à deux axes (scanner à miroir).

16. Dispositif selon la revendication 15, **caractérisé en ce que** la plaque en fibres comporte à l'entrée et à la sortie des surfaces courbées ;

17. Dispositif selon une des revendications 11 à 16, **caractérisé en ce qu'**il s'agit d'un miroir sphérique partiellement transparent dans le cas d'un miroir concave (9) pour la superposition de l'image vidéo projetée sur la rétine de l'oeil (11) avec le champ de vision qui regarde l'oeil de l'observateur à travers le miroir (9) partiellement transparent.
